# EUROPEAN PATENT APPLICATION

(11) **EP 3 733 480 A1**
(43) Date of publication of application: **04.11.2020**
(21) Application number: 20169833.9
(22) Date of filing: 16.04.2020
(51) Int. Cl.: B62D 5/04, F16C 27/06

(54) **BALL SCREW DEVICE AND STEERING DEVICE**

(30) Priority: 17.04.2019 JP 2019078795; 24.04.2019 JP 2019083368
(71) Applicant: JTEKT CORPORATION, Chuo-ku, Osaka-shi, Osaka 542-8502 (JP)
(72) Inventor: IINUMA, Yusuke, Osaka-shi,, Osaka 542-8502 (JP)
(74) Representative: Winter, Brandl, Fürniss, Hübner, Röss, Kaiser, Polte - Partnerschaft mbB

(57) **Abstract**

A ball screw device includes a screw shaft body, a ball nut, a housing, a bearing, an annular first biasing member and an annular second biasing member, and an annular first holding member and an annular second holding member. The housing includes a cylindrical first housing and a cylindrical second housing that are coupled to each other in a surface-contact state. The first housing includes a bearing holding portion that holds the bearing slidably in the axial direction. The second housing includes a pressing portion that protrudes radially inward than the bearing holding portion. At least one of the first holding member and the second holding member generates a gap between the first housing and the second housing when the bearing, the first biasing member, the second biasing member, the first holding member, and the second holding member are wrongly mounted to one another.

## Description

### TECHNICAL FIELD

The present invention relates to a ball screw device that rotates a ball nut to move a screw shaft body in an axial direction, and a steering device including the ball screw device.

### BACKGROUND ART

A ball screw device includes a screw shaft that is formed with a spiral screw groove on an outer circumferential surface, and a ball nut that is screwed into the screw groove of the screw shaft via a plurality of balls. The ball nut is rotated to cause the screw shaft to linearly move.

For example, as described in JP2013-147074A, a ball screw device used in a power steering device is desirable to reduce a gear striking noise by preventing a ball nut from vibrating in an axial direction, or to improve a steering feeling at the start of turning a steering wheel. Therefore, the ball screw device described in JP2013-147074A adopts a mechanism in which a bearing that supports the ball nut is interposed between elastic members in a preloading state, and the bearing and the ball nut can slightly move from a neutral position to two sides in the axial direction and can return to the neutral position again by an elastic force.

For example, as described in JP2013-147073A, a ball screw device used in a power steering device is desirable to reduce a gear striking noise by preventing a ball nut from vibrating in an axial direction, or to improve a steering feeling at the start of turning a steering wheel. Therefore, the ball screw device described in JP2013-147073A adopts a mechanism in which a bearing that supports the ball nut is interposed between biasing members in a preloading state, and the bearing and the ball nut can slightly move from a neutral position to two sides in the axial direction and can return to the neutral position by an elastic force.

In the mechanism described in JP2013-147073A, it is required to accurately hold the biasing members since a steering feeling of a driver may be impaired when deviating from a preloading direction of the biasing members. Therefore, a housing formed by mounting two members in a spigot structure is used. A force at the time of mounting the housing is used to sandwich the biasing members so as to apply the force to the biasing members straight along an axial center.

In a case in which the bearing is interposed between two annular elastic members as in the ball screw device described in JP2013-147074A, it is required to accurately hold the elastic members since a steering feeling of a driver may be impaired when axes of the elastic members deviate from each other. When the elastic members are pressurized using a force at the time of mounting a housing, the elastic members are interposed by a spigot portion of the housing, so that the force can be applied to the elastic members straight along an axial center.

According to a configuration described in JP2013-147073A, complicated and accurate processing is required for providing the spigot structure in the housing such that manufacturing efficiency is low. On the other hand, when the housing is mounted by surface contact instead of providing the spigot portion in the housing, holding members that hold the biasing members may be provided separately in order to accurately apply a force to the biasing members in the axial direction. In this case, however, even when the holding members are mounted in wrong mounting directions, it is less likely to find the error.

### SUMMARY OF INVENTION

In view of the above circumstances, the present disclosure provides a steering device and a ball screw device that can improve manufacturing efficiency without using a structure in which elastic members are interposed in a spigot portion, and use a force at the time of mounting a housing to prevent an influence of a processing error and accurately pressurize the elastic members.

Further, the present disclosure provides a steering device and a ball screw device that can improve manufacturing efficiency of a housing without using a structure in which biasing members are interposed in a spigot portion, and can easily find a mounting error of holding members.

According to an aspect of the present disclosure, a ball screw device includes a screw shaft body that includes a first screw groove at least in part on an outer circumferential surface of the screw shaft body, a ball nut that includes a second screw groove at least in part on an inner circumferential surface of the ball nut, the second screw groove having a rolling path on which a plurality of balls rolls together with the first screw groove, a housing that accommodates the screw shaft body and the ball nut, a bearing that holds the ball nut rotatably with respect to the housing, a first biasing member and a second biasing member that are respectively provided on both ends of the bearing, and the first biasing member and the second biasing member having an annular shape, and a first holding member that holds the first biasing member in a state where the first biasing member is fitted into the first holding member and a second holding member that holds the second biasing member in a state where the second biasing member is fitted into the second holding member, the first holding member and the second holding member having an annular shape. The housing includes a first housing and a second housing that are coupled to each other in a surface-contact state in an axial direction of the screw shaft body, the first housing and the second housing having a cylindrical shape. The first housing includes a bearing holding portion that holds the bearing slidably in the axial direction, the bearing holding portion having a cylindrical shape. The second housing includes a pressing portion that is arranged to protrude radially inward. And, at least one of the first holding member and the second holding member is configured to generate a gap between the first housing and the second housing when the bearing, the first biasing member, the second biasing member, the first holding member, and the second holding member are wrongly mounted to one another.

According to another aspect of the present disclosure, a steering device includes the ball screw device according to the aspect, and a driver that is fixed in the housing and rotatably drives the ball nut. The screw shaft body is configured to turn turning wheels.

According to an aspect of the present disclosure, a housing structure can be easily manufactured, a gear striking noise can be reduced, and a steering feeling of a driver can be prevented from lowering at the start of turning a steering wheel.

According to an aspect of the present disclosure, a housing structure can be easily manufactured, and a mounting error of the holding members can be easily found.

### BRIEF DESCRIPTION OF DRAWINGS

Fig. 1 is a diagram showing a schematic configuration of a steering device according to an embodiment.
Fig. 2 is a cross-sectional view showing a part of a vicinity of a ball nut according to the present embodiment.
Fig. 3 is a cross-sectional view showing a part of a coupling portion between a first housing and a second housing according to the present embodiment.
Fig. 4 is a cross-sectional view showing the first housing and the second housing before coupling according to the present embodiment.
Fig. 5 is a diagram showing a steering device according to another embodiment.
Fig. 6 is a diagram showing a steering device according to another embodiment.
Fig. 7 is a diagram showing a schematic configuration of a steering device according to an embodiment.
Fig. 8 is a cross-sectional view showing a part of a vicinity of a ball nut according to the present embodiment.
Fig. 9 is a cross-sectional view showing a part of a coupling portion between a first housing and a second housing according to the present embodiment.
Fig. 10 is a diagram showing a relationship of length directions of members in an axial direction according to the present embodiment.
Fig. 11 is a cross-sectional view showing a case in which a second holding member is mounted in a wrong direction according to the present embodiment.
Fig. 12 is a cross-sectional view showing a first housing and a second housing before coupling according to the present embodiment.
Fig. 13 is a cross-sectional view showing a first protruding member and a second protruding member that are separated from a bearing.
Fig. 14 is a cross-sectional view showing a first holding member and a second holding member in another shape.
Fig. 15 is a diagram showing a steering device according to another embodiment.
Fig. 16 is a diagram showing a steering device according to another embodiment.

### DESCRIPTION OF EMBODIMENTS

Next, embodiments of a steering device including a ball screw device according to an aspect of the present disclosure will be described with reference to the drawings. It should be noted that all embodiments described below show inclusive or specific examples. Numerical values, shapes, materials, constituent elements, arrangement positions and coupling forms of the constituent elements, steps, order of the steps, and the like shown in the following embodiment are merely examples, and are not intended to limit the present invention. In addition, among the constituent elements in the following embodiment, constituent elements that are not described in independent claims indicating an uppermost concept are described as any constituent elements.

The drawings are schematic diagrams that are appropriately highlighted or omitted and whose ratios are adjusted appropriately for describing the present invention, and may be different from actual shapes, positional relationships, and ratios.

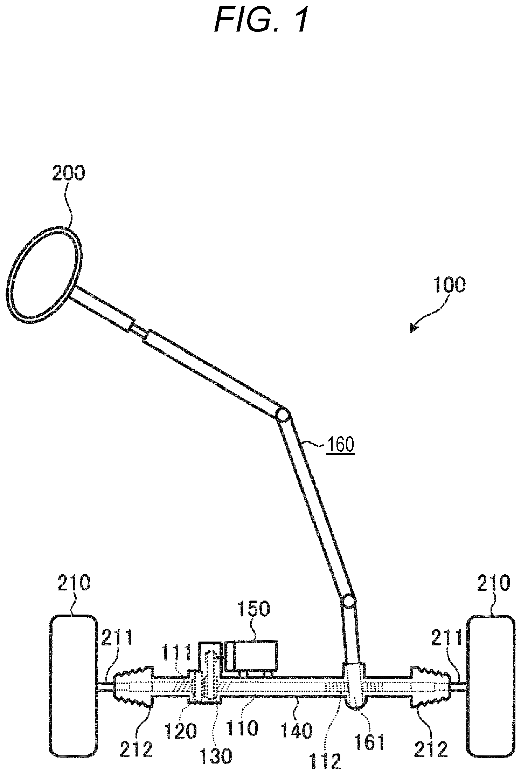

Fig. 1 is a diagram showing a steering device. As shown in Fig. 1, a steering device 100 is a power steering device that turns turning wheels 210 based on a torque generated by a driver operating a steering member 200 such as a steering wheel and an assist torque generated by a drive unit 150. The steering device 100 includes a ball screw device and the drive unit 150. The ball screw device includes a screw shaft body 110, a ball nut 120, a pulley 130, and a housing 140. According to the present embodiment, the steering device 100 includes a steering shaft 160 that is coupled to a plurality of shafts by a universal joint and mechanically transmits a rotation torque of the steering member 200 generated by an operation from the driver to the screw shaft body 110.

The screw shaft body 110 is a rod-shaped member including a first screw groove 111 on a portion of an outer circumferential surface of the screw shaft body 110. The screw shaft body 110 provided in the steering device 100 is coupled to the turning wheels 210 via tie rods 211, and functions as a turning shaft body to turn the turning wheels 210. Other portions of the screw shaft body 110 are provided with a rack 112, and a rack and pinion mechanism engaging with a pinion 161 that is provided at a tip end portion of the steering shaft 160. The steering device 100 is a so-called electric power steering device in which the rotation torque transmitted via the steering shaft 160 is converted into a linear motion of the screw shaft body 110, and also the assist torque generated by the drive unit 150 is converted into a linear motion of the screw shaft body 110.

The housing 140 is a member that accommodates the screw shaft body 110 and the ball nut 120. According to the present embodiment, the housing 140 is a member that is fixed to a vehicle body using a bracket molded integrally and guides the screw shaft body 110 accommodated in the housing 140 in an axial direction. The housing 140 is formed of an aluminum alloy or the like. Bellows-like boots 212 formed of rubber or the like are mounted on two end portions of the housing 140. Since two opening end portions in a longitudinal direction of the housing 140 are sealed by the boots 212, the housing 140 is sealed to a certain extent, thereby preventing water, mud, and the like from entering into the housing 140.

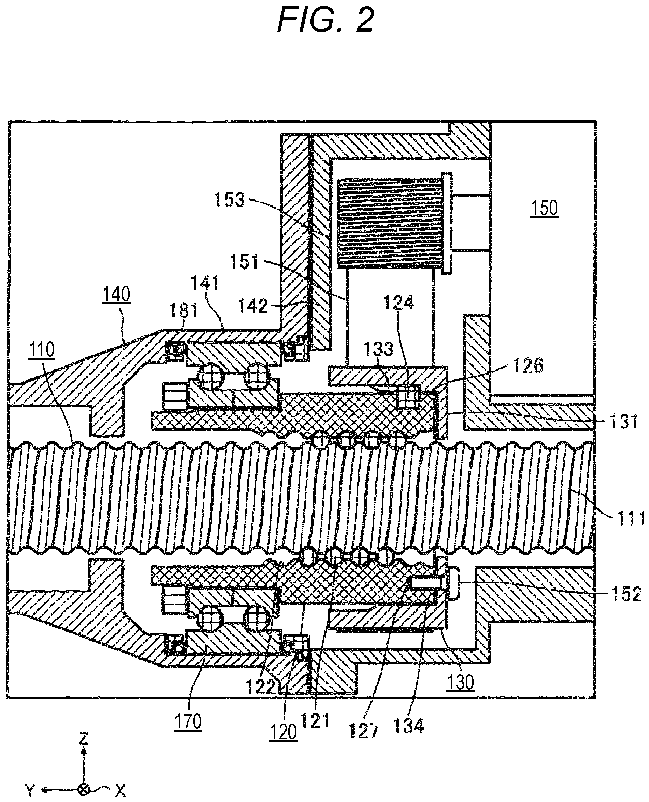

Fig. 2 is a cross-sectional view showing a part of a vicinity of the ball nut according to the present embodiment. As shown in Fig. 2, the housing 140 includes a cylindrical first housing 141 and a cylindrical second housing 142 that are coupled in a surface contact state in an axial direction (a Y axis direction in the figure) of the screw shaft body 110. Here, the surface contact state refers to a state in which an end surface of the first housing 141 and an end surface of the second housing 142 are brought into surface-contact and coupled when no fitting structure is provided inside the first housing 141 and the second housing 142. Therefore, neither a part of the first housing 141 that protrudes towards an inner side of the second housing 142, nor a part of the second housing 142 that protrudes towards an inner side of the first housing 141 is provided in a coupled state. According to the present embodiment, a surface where the first housing 141 and the second housing 142 are coupled is one plane. Other than inner sides of the first housing 141 and the second housing 142 where the ball nut 120 and the screw shaft body 110 are accommodated, other portions of the first housing 141 and the second housing 142 may be fitted to each other. According to the present embodiment, positions of the first housing 141 and the second housing 142 are fitted by pins.

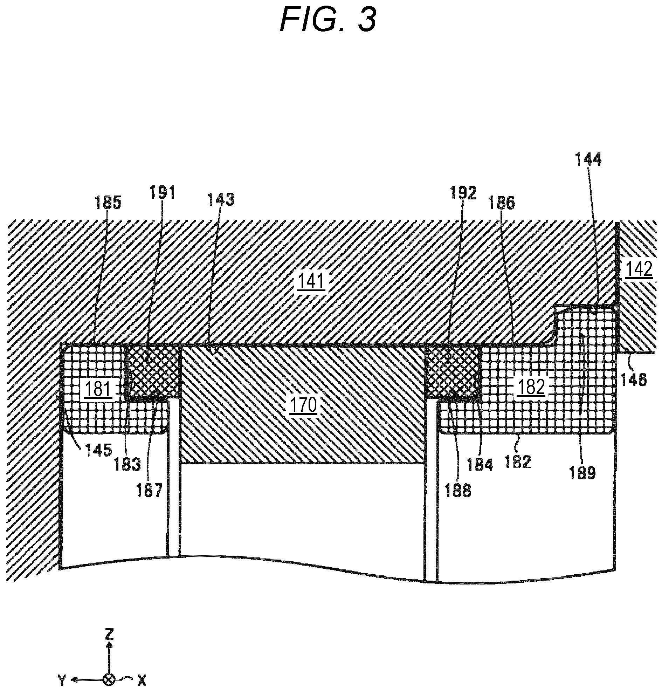

Fig. 3 is a cross-sectional view showing a part of a coupling portion between the first housing and the second housing according to the present embodiment. As shown in Fig. 3, the first housing 141 is a part of the housing 140 that holds a bearing 170 and rotatably holds the ball nut 120 via the bearing 170. The first housing 141 includes a bearing holding portion 143 and a diameter expansion portion 144.

The bearing holding portion 143 is a cylindrical portion that slidably holds the bearing 170 in the axial direction (the Y axis direction in the figure) of the screw shaft body 110, and forms a cylindrical space. A tube axis of the bearing holding portion 143 matches axes of the bearing 170, the ball nut 120, and the screw shaft body 110. An engagement portion 145 that axially engages with a first holding member 181 which will be described later is provided on an end surface of the bearing holding portion 143 at an opposite side to the second housing 142 so as to protrude inwardly.

The diameter expansion portion 144 is provided at an end portion of the bearing holding portion 143 at a side near the second housing 142, and has a larger diameter than the bearing holding portion 143. The diameter expansion portion 144 is a cylindrical portion of the first housing 141, and forms a disk-like space. A shape of the diameter expansion portion 144 is not particularly limited as long as the diameter expansion portion 144 can accommodate a flange 189 of a second holding member 182 which will be described later.

The second housing 142 is a part of the housing 140 where the drive unit 150 which will be described later is mounted, and includes a pressing portion 146.

The pressing portion 146 is a cylindrical (annular) portion that protrudes radially inward than the diameter expansion portion 144 of the first housing 141. A surface of the pressing portion 146 at a side near the first housing 141 is flush with a coupling surface of the first housing 141 and a coupling surface of the second housing 142.

The ball nut 120 is a cylindrical member that faces the first screw groove 111 provided on the screw shaft body 110 and includes a second screw groove 122 on an inner circumferential surface of the ball nut 120. The first screw groove 111 and the second screw groove 122 form a rolling path for rolling a plurality of balls 121. A circulation member 124 formed with a circulation path for the balls 121 is mounted in a press-fit state into a mounting hole formed on an outer circumferential surface of the ball nut 120.

The circulation member 124 is formed with the circulation path that guides the balls 121 scooped up from a communication hole communicating with the rolling path to a communication hole provided at another position and returns the balls 121 to the rolling path. The circulation path may be formed inside the circulation member 124, or may be formed by a groove provided on a bottom surface of a mounting hole 123 and a groove facing the circulation member 124.

When the ball nut 120 is rotated around the screw shaft body 110, the circulation member 124 has a function of guiding the balls 121 scooped up from the rolling path to the circulation path through any one of communication holes and discharging the balls 121 to the rolling path through the other communication hole. The balls 121 circulate endlessly in the rolling path through the circulation path, so that rotation of the ball nut 120 can be converted into a linear motion of the screw shaft body 110 with a low friction resistance.

The ball nut 120 is accommodated in the housing 140 in a state in which the screw shaft body 110 passes through the ball nut 120, and the ball nut 120 is mounted in the housing 140 via the bearing 170. The ball nut 120 rotates around an axis of the screw shaft body 110 with respect to the housing 140. The pulley 130 is fitted onto an end portion of the ball nut 120 at an opposite side to the bearing 170.

The pulley 130 is a cylindrical member that has a cylindrical inner circumferential surface fitted with an outer circumferential surface of the ball nut 120 and is fastened to the ball nut 120 in the axial direction (the Y axis direction in the figure) of the screw shaft body 110.

The pulley 130 is rotated around the axis of the screw shaft body 110 by a rotation torque transmitted from the drive unit 150, and rotates the ball nut 120 via a disk 131 that is fixed to an end surface of the ball nut 120 by a fastening force of a fastening member 152.

An outer circumferential surface of the pulley 130 may be provided with a structure such as a groove to increase a friction force between the structure and a belt 151.

The drive unit 150 is fixed to the second housing 142 and rotatably drives the pulley 130. In the present embodiment, the drive unit 150 includes a motor, a drive pulley 153 mounted on an output shaft of the motor, and an endless belt 151 wound around the drive pulley 153 and the pulley 130 which functions as a driven pulley.

The steering device 100 is configured with an assist mechanism that includes a ball screw device and the drive unit 150. The ball screw device includes the screw shaft body 110, the ball nut 120, and the pulley 130. The drive unit 150 includes the drive pulley 153 having a smaller diameter than the pulley 130. The assist mechanism generates an assist torque that assists a rotation torque from the steering member 200. Specifically, the assist mechanism transmits the assist torque to the screw shaft body 110 by the following operation. That is, when the motor rotates the drive pulley 153, the pulley 130 is rotated via the belt 151. Since the pulley 130 has a larger diameter than the drive pulley 153, the pulley 130 is in a decelerated state. The ball nut 120 integrally mounted with the pulley 130 is also rotated. When the ball nut 120 is rotated relative to the screw shaft body 110, the balls 121 receive a load (a friction force) from the ball nut 120 and the screw shaft body 110 and endlessly circulate through the rolling path and the circulation path. A torque applied to the ball nut 120 is converted into a linear motion of the screw shaft body 110 by endlessly circulating the balls 121, and the screw shaft body 110 moves relative to the ball nut 120 in the axial direction. That is, an axial force is applied to the screw shaft body 110. The axial force applied to the screw shaft body 110 serves as an assist force to assist a steering operation from the driver.

As shown in Fig. 3, a first biasing member 191 and a second biasing member 192 are annular members that are respectively provided on two end surfaces of an outer ring of the bearing 170. The first biasing member 191 and the second biasing member 192 regulate an axial movement of the bearing 170 relative to the bearing holding portion 143 of the first housing 141 within a predetermined range. In a state in which no force is applied to the bearing 170 from other members, the first biasing member 191 and the second biasing member 192 maintain the bearing 170 at a neutral position where the bearing 170 may move to an opening side or an opposite side relative to the bearing holding portion 143. According to the present embodiment, the first biasing member 191 is brought into contact with an end surface of the outer ring of the bearing 170 at a side near the engagement portion 145, and the second biasing member 192 is brought into contact with an end surface of the outer ring of the bearing 170 at the opening side. Although rubber is used as a material of the first biasing member 191 and the second biasing member 192 in the present embodiment, the present invention is not limited thereto. Alternatively, the material may include a spring such as a coil spring and a plate spring, an elastomer, and the like. The first biasing member 191 and the second biasing member 192 have the same size, the same shape, and the same elastic modulus.

The first holding member 181 is an annular member that holds the first biasing member 191 in a fitted state. The first holding member 181 includes a first outer circumferential surface 185 that abuts against an inner circumferential surface of the bearing holding portion 143, a first clamping surface 183 that faces an end surface of the outer ring of the bearing 170 and clamps the first biasing member 191, and a first fitting portion 187 to which the first biasing member 191 is fitted. The first holding member 181 determines a position of the first biasing member 191 held by the first fitting portion 187 with respect to the bearing holding portion 143 by fitting the first outer circumferential surface 185 to the bearing holding portion 143. The first holding member 181 engages with the engagement portion 145 of the first housing 141 such that the first holding member 181 is in a state of not moving with respect to the bearing holding portion 143. The first biasing member 191 is compressed between the first clamping surface 183 and the bearing 170. The first biasing member 191 is surrounded by the inner circumferential surface of the bearing holding portion 143, an end surface of the bearing 170, an outer circumferential surface of the first fitting portion 187, and the first clamping surface 183. Deformation of the first biasing member 191 due to compression is regulated. Therefore, a repulsive force of the first biasing member 191 increases rapidly when the first biasing member 191 is strongly compressed, a movement of the bearing 170 can be strongly regulated and the first biasing member 191 can be prevented from buckling.

The second holding member 182 is an annular member that holds the second biasing member 192 in a fitted state. The second holding member 182 includes a second outer circumferential surface 186 that abuts against the inner circumferential surface of the bearing holding portion 143, a second clamping surface 184 that faces an end surface of the outer ring of the bearing 170 and clamps the second biasing member 192, a second fitting portion 188 to which the second biasing member 192 is fitted, and the flange 189 that protrudes outward than the bearing holding portion 143 in a radial direction and is accommodated in the diameter expansion portion 144 provided in the first housing 141. The second holding member 182 determines a position of the second biasing member 192 held by the second fitting portion 188 with respect to the bearing holding portion 143 by fitting the second outer circumferential surface 186 to the bearing holding portion 143. The inner circumferential surface of the bearing holding portion 143 is a cylinder whose diameter does not change in the axial direction. The first outer circumferential surface 185 of the first holding member 181 and the second outer circumferential surface 186 of the second holding member 182 are fitted to the bearing holding portion 143. Therefore, a processing error of the bearing holding portion 143 does not affect a relative positional relationship between the first biasing member 191 held by the first holding member 181 and the second biasing member 192 held by the second holding member 182. Therefore, in the axial direction (the Y axis direction in the figure), when the bearing 170 moves from the neutral position to either side, a moving distance (moving state) of the bearing 170 from the neutral positon to one side can be made equal to a moving distance (moving state) of the bearing 170 from the neutral position to the other side. The second biasing member 192 is surrounded by the inner circumferential surface of the bearing holding portion 143, an end surface of the bearing 170, an outer circumferential surface of the second fitting portion 188, and the second clamping surface 184. Similar to the first biasing member 191, deformation of the second biasing member 192 due to compression is regulated. Therefore, a repulsive force of the second biasing member 192 increases rapidly when the second biasing member 192 is strongly compressed, a movement of the bearing 170 can be strongly regulated and the second biasing member 192 can be prevented from buckling.

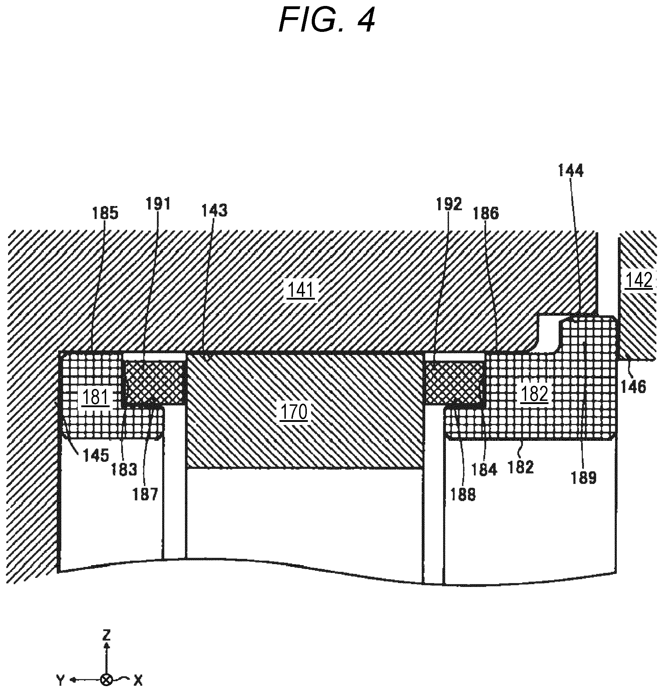

Next, a preloading method of the first biasing member 191 and the second biasing member 192 will be described. Fig. 4 is a cross-sectional view showing the first housing 141 and the second housing 142 before coupling. As shown in Fig. 4, the first holding member 181 that holds the first biasing member 191, the bearing 170, and the second holding member 182 that holds the second biasing member 192 are inserted into the bearing holding portion 143 of the first housing 141 in advance. The pressing portion 146 of the second housing 142 presses the flange 189 of the second holding member 182 towards the engagement portion 145 by coupling the first housing 141 and the second housing 142 in the axial direction. A pressing force compresses the first biasing member 191 between the first clamping surface 183 and the bearing 170 and compresses the second biasing member 192 between the bearing 170 and the second clamping surface 184. The first biasing member 191 and the second biasing member 192 are evenly pressurized.

According to the steering device 100 including the ball screw device described in the embodiment described above, for example, a mounting direction of the second holding member 182 is wrong when the bearing 170, the first biasing member 191, the second biasing member 192, the first holding member 181, and the second holding member 182 are mounted to each other, that is, when the second holding member 182 is mounted in an opposite front-rear (or left-right) direction, the second fitting portion 188 and the second clamping surface 184 protrude from an opening end surface of the first housing 141. As described above, since at least one of the second fitting portion 188 and the second clamping surface 184 interferes with the pressing portion 146 of the second housing 142, a gap may be formed between the first housing 141 and the second housing 142. Accordingly, a mounting error of at least one of the first holding member 181 and the second holding member 182 can be easily found. Since the pressing portion 146 of the second housing 142 presses a peripheral portion of the flange 189 of the second holding member 182 that is accommodated in the diameter expansion portion 144 having a larger diameter than the bearing holding portion 143, the first biasing member 191 and the second biasing member 192 can be pressurized in the axial direction with high accuracy without causing the second housing 142 to greatly protrude inward in the radial direction. Therefore, a freedom degree of design such as accommodating the large pulley 130 inside the second biasing member 192 can be improved.

Since a coupling surface of the first housing 141 and a coupling surface of the second housing 142 are flush with each other, the coupling surface of the first housing 141 and the coupling surface of the second housing 142 can be easily processed.

Since the first holding member 181 and the second holding member 182 abuts against and slide on the inner circumferential surface of the same bearing holding portion 143, coaxiality between the first biasing member 191 and the second biasing member 192 can be improved without causing a processing error due to misalignment of the diameter expansion portion144 and the bearing holding portion 143, and the first biasing member 191 and the second biasing member 192 can be pressurized in parallel to a tube axis direction of the bearing holding portion 143, compared with, for example, a case in which a radial position of the second holding member 182 is determined by fitting an outer periphery of the flange 189 and an inner periphery of the diameter expansion portion 144 of the first housing 141. Therefore, no matter in which direction the driver rotates the steering member 200, a steering feeling transmitted from the steering member 200 can be the same, and the driver can be prevented from having an uncomfortable feeling.

In a state in which the ball nut 120 is not rotated, the first biasing member 191 and the second biasing member 192 respectively press the bearing 170 in opposite axial directions, and maintain the bearing 170 at the neutral position. When the ball nut 120 starts to rotate, one of the first biasing member 191 and the second biasing member 192 is compressed to increase a preloading, and the other one is expanded to decrease a preloading. Accordingly, the ball nut 120 can be prevented from vibrating in the axial direction and a gear striking noise can be reduced. In addition, a steering feeling of the driver can be prevented from lowering at the start of turning the steering member 200.

When a strong force is applied to the bearing 170 in the axial direction, the first fitting portion 187 of the first holding member 181 or the second fitting portion 188 of the second holding member 182 abuts against the bearing 170, such that the first biasing member 191 or the second biasing member 192 is prevented from being greatly deformed. Accordingly, durability of the first biasing member 191 and the second biasing member 192 can be improved.

The present invention is not limited to the embodiment described above. For example, another embodiment of the present invention may be an embodiment implemented by combining any constituent element described in the present specification or excluding some constituent elements. In addition, the present invention includes various modifications of the above-described embodiment conceived by those skilled in the art without departing from the spirit of the invention, that is, meanings indicated by words described in claims.

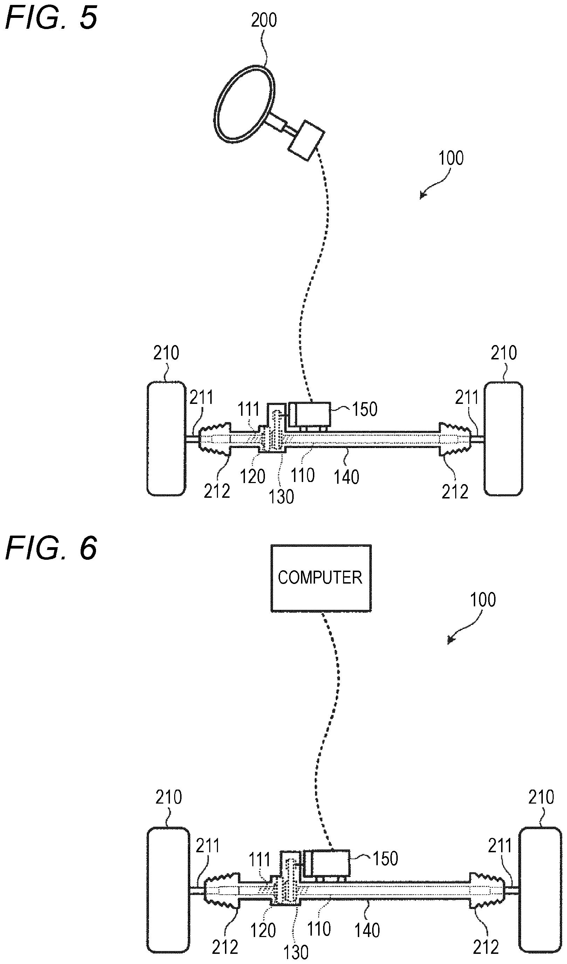

As shown in Fig. 5, the steering device 100 may be, for example, a so-called steer by wire system (SBW) in which the steering member 200 and the screw shaft body 110 are not mechanically coupled, a sensor or the like reads a rotation angle of the steering member 200, rotation of the ball nut 120 causes the screw shaft body 110 to reciprocate based on a signal of the sensor or the like, and the turning wheels 210 are turned.

As shown in Fig. 6, the steering device 100 may be an automatic steering device that does not include the steering member 200, the steering shaft 160, or the like, and is steered by a computer.

Hereinafter, an embodiment of a steering device including a ball screw device according to another aspect of the present disclosure will be described with reference to the drawings. It should be noted that all embodiments described below show inclusive or specific examples. Numerical values, shapes, materials, constituent elements, arrangement positions and coupling forms of the constituent elements, steps, order of the steps, and the like shown in the following embodiment are merely examples, and are not intended to limit the present invention. In addition, among the constituent elements in the following embodiment, constituent elements that are not described in independent claims indicating an uppermost concept are described as any constituent elements.

The drawings are schematic diagrams that are appropriately highlighted or omitted and whose ratios are adjusted appropriately for describing the present invention, and may be different from actual shapes, positional relationships, and ratios.

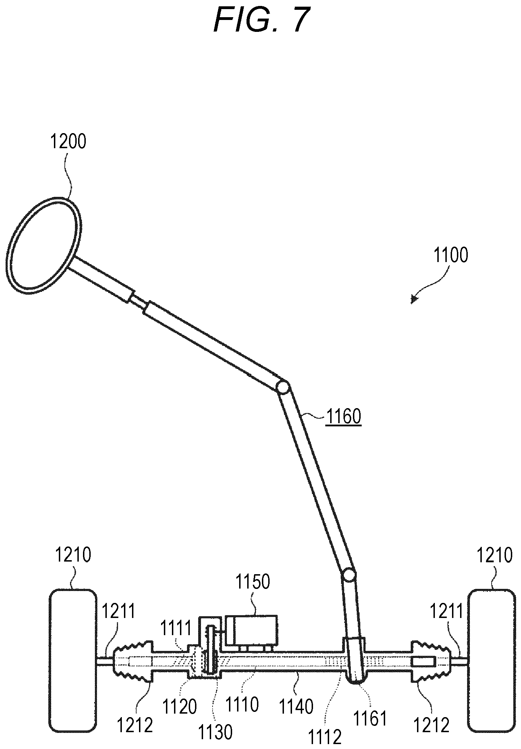

Fig. 7 is a diagram showing a steering device. As shown in Fig. 7, a steering device 1100 is a power steering device that turns turning wheels 1210 based on a torque generated by a driver operating a steering member 1200 such as a steering wheel and an assist force generated by a drive unit 1150. The steering device1100 includes a ball screw device and a drive unit 1150. The ball screw device includes a screw shaft body 1110, a ball nut 1120, a pulley 1130, and a housing 1140. According to the present embodiment, the steering device 1100 includes a steering shaft 1160 that is coupled to a plurality of shafts by a universal joint and mechanically transmits a rotation torque of the steering member 1200 generated by an operation from the driver to the screw shaft body 1110.

The screw shaft body 1110 is a rod-shaped member including a first screw groove 1111 on a portion of an outer circumferential surface of the screw shaft body 1110. The screw shaft body 1110 provided in the steering device 1100 is coupled to the turning wheels 1210 via tie rods 1211, and functions as a turning shaft body to turn the turning wheels 1210. Other portions of the screw shaft body 1110 are provided with a rack 1112, and a rack and pinion mechanism engaging with a pinion 1161 provided at a tip end portion of the steering shaft 1160. The steering device 1100 is a so-called electric power steering device in which the rotation torque transmitted via the steering shaft 1160 is converted into a linear motion of the screw shaft body 1110, and also the assist force generated by the drive unit 1150 is converted into a linear motion of the screw shaft body 1110.

The housing 1140 is a member that accommodates the screw shaft body 1110 and the ball nut 1120. According to the present embodiment, the housing 1140 is a member that is fixed to a vehicle body using a bracket molded integrally and guides the screw shaft body 1110 accommodated in the housing 1140 in an axial direction. The housing 1140 is formed of an aluminum alloy or the like. Bellows-like boots 1212 formed of rubber or the like are mounted on two end portions of the housing 1140. Since two opening end portions in a longitudinal direction of the housing 1140 are sealed by the boots 1212, the housing 1140 is sealed to a certain extent, thereby preventing water, mud, and the like from entering into the housing 1140.

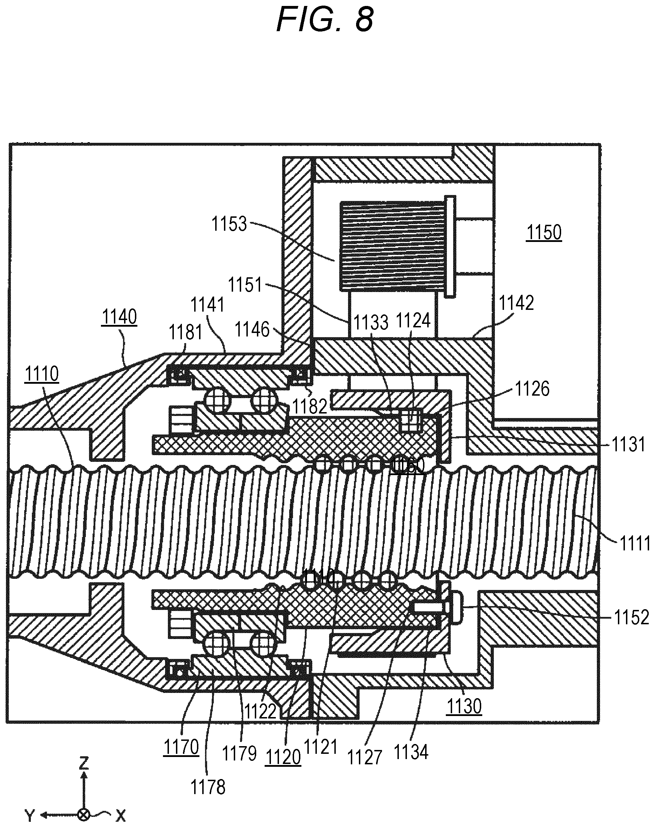

Fig. 8 is a cross-sectional view showing a part of a vicinity of the ball nut. As shown in Fig. 8, the housing 1140 includes a cylindrical first housing 1141 and a cylindrical second housing 1142 that are coupled in a surface contact state in an axial direction (a Y axis direction in the figure) of the screw shaft body 1110. Here, the surface contact state refers to a state in which an end surface of the first housing 1141 and an end surface of the second housing 1142 are brought into surface-contact and coupled when no fitting structure (spigot structure) is provided inside the first housing 1141 and the second housing 1142. Therefore, neither a part of the first housing 1141 that protrudes towards an inner side of the second housing 1142, nor a part of the second housing 1142 that protrudes towards an inner side of the first housing 1141 is provided in a coupled state. According to the present embodiment, a surface where the first housing 1141 and the second housing 1142 are coupled is one plane. Other than inner sides of the first housing 1141 and the second housing 1142 where the ball nut 1120 and the screw shaft body 1110 are accommodated, other portions of the first housing 1141 and the second housing 1142 may be fitted to each other. According to the present embodiment, positions of the first housing 1141 and the second housing 1142 are fitted by knock pins.

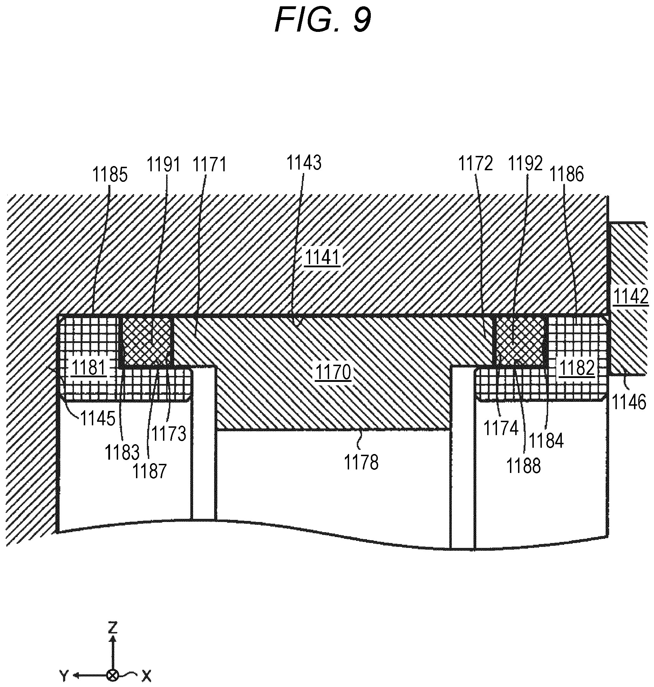

Fig. 9 is a cross-sectional view showing a part of a coupling portion between the first housing and the second housing according to the present embodiment. As shown in Fig. 9, the first housing 1141 is a part of the housing 1140 that holds a bearing 1170 and rotatably holds the ball nut 1120 via the bearing 1170. The first housing 1141 includes a bearing holding portion 1143.

The bearing holding portion 1143 is a cylindrical portion that slidably holds the bearing 1170 in the axial direction (the Y axis direction in the figure) of the screw shaft body 1110, and forms a cylindrical space. A tube axis of the bearing holding portion 1143 matches axes of the bearing 1170, the ball nut 1120, and the screw shaft body 1110. An engagement portion 1145 that axially engages with a first holding member 1181 which will be described later is provided on an end surface of the bearing holding portion 1143 at an opposite side to the second housing 1142 so as to protrude inwardly.

The second housing 1142 is a part of the housing 1140 where the drive unit 1150 which will be described later is mounted, and includes a pressing portion 1146.

The pressing portion 1146 includes a region located radially inward than the bearing holding portion 1143 of the first housing 1141. A surface of the pressing portion 1146 at a side near the first housing 1141 is flush with a coupling surface of the first housing 1141 and a coupling surface of the second housing 1142. According to the present embodiment, the pressing portion 1146 is a cylindrical (annular) portion surrounding an outer side of the pulley 1130 which will be described later. A peripheral wall of the pressing portion 1146 is provided with two through slits through which a belt 1151 for driving the pulley 1130 is inserted. The region of the pressing portion 1146 that is located radially inward than the bearing holding portion 1143 is a region where a second holding member 1182 which will be described later can be pressed straightly in the axial direction. The pressing portion 1146 may only include the region located radially inward than the bearing holding portion 1143 without abutting against the first housing 1141.

The ball nut 1120 is a cylindrical member that faces the first screw groove 1111 provided on the screw shaft body 1110 and includes a second screw groove 1122 on an inner circumferential surface of the ball nut 1120. The first screw groove 1111 and the second screw groove 1122 form a rolling path for rolling a plurality of balls 1121. A circulation member 1124 formed with a circulation path for the balls 1121 is mounted in a press-fit state into a mounting hole that is formed on an outer circumferential surface of the ball nut 1120.

The circulation member 1124 is formed with the circulation path that guides the balls 1121 scooped up from a communication hole communicating with the rolling path to a communication hole provided at another position and returns the balls 1121 to the rolling path. The circulation path may be formed inside the circulation member 1124, or may be formed by a groove provided on a bottom surface of a mounting hole 1123 and a groove facing the circulation member 1124.

When the ball nut 1120 is rotated around the screw shaft body 1110, the circulation member 1124 has a function of guiding the balls 1121 scooped up from the rolling path to the circulation path through any one of communication holes and discharging the balls 1121 to the rolling path through the other communication hole. The balls 1121 circulate endlessly in the rolling path through the circulation path, so that rotation of the ball nut 1120 can be converted into a linear motion of the screw shaft body 1110 with a low friction resistance.

The ball nut 1120 is accommodated in the housing 1140 in a state in which the screw shaft body 1110 passes through the ball nut 1120, and the ball nut 1120 is mounted in the housing 1140 via the bearing 1170. The ball nut 1120 rotates around an axis of the screw shaft body 1110 with respect to the housing 1140. The pulley 1130 is fitted onto an end portion of the ball nut 1120 at an opposite side to the bearing 1170.

The bearing 1170 is provided between the first housing 1141 and the ball nut 1120, and rotatably holds the ball nut 1120 with respect to the first housing 1141. In the axial direction (the Y axis direction in the figure), the bearing 1170 is slidable with respect to the bearing holding portion 1143 of the first housing 1141, and is fixed with respect to the ball nut 1120. A type of the bearing 1170 is not particularly limited. A ball bearing provided with balls between an outer ring 1178 and an inner ring 1179 is used in the present embodiment.

A side of the outer ring 1178 of the bearing 1170 near the first holding member 1181 is axially provided with an annular first protruding member 1171 that axially protrudes from one end surface of the outer ring 1178 of the bearing 1170 towards the first holding member 1181. According to the present embodiment, the first protruding member 1171 and the outer ring 1178 of the bearing 1170 are integrally formed. A cross-sectional shape of the first protruding member 1171 is not particularly limited, and is rectangular in the present embodiment. An outer circumferential surface of the first protruding member 1171 is flush with an outer circumferential surface of the outer ring 1178. The first protruding member 1171 and the bearing 1170 slide with respect to the bearing holding portion 1143. A first tip end surface 1173 at an opposite side to the bearing 1170 abuts against a first biasing member 1191 and the first biasing member 1191 is interposed between the first tip end surface 1173 and the first holding member 1181. An inner circumferential surface of the first protruding member 1171 is slidable with respect to a first fitting portion 1187 of the first holding member 1181 which will be described later.

According to the present embodiment, a side of the outer ring 1178 of the bearing 1170 near the second holding member 1182 is axially provided with an annular second protruding member 1172 that axially protrudes from one end surface of the outer ring 1178 of the bearing 1170 towards the second holding member 1182. According to the present embodiment, the second protruding member 1172 and the outer ring 1178 of the bearing 1170 are integrally formed. A cross-sectional shape of the second protruding member 1172 is not particularly limited. Similar to the first protruding member 1171, the cross-sectional shape of the second protruding member 1172 is rectangular in the present embodiment. An outer circumferential surface of the second protruding member 1172 is flush with the outer circumferential surface of the outer ring 1178. The second protruding member 1172 and the bearing 1170 slide with respect to the bearing holding portion 1143. A second tip end surface 1174 at an opposite side to the bearing 1170 abuts against a second biasing member 1192 and the second biasing member 1192 is interposed between the second tip end surface 1174 and the second holding member 1182. An inner circumferential surface of the second protruding member 1172 is slidable with respect to a second fitting portion 1188 of the second holding member 1182 which will be described later.

The pulley 1130 is a cylindrical member that has a cylindrical inner circumferential surface fitted with an outer circumferential surface of the ball nut 1120 and is fastened to the ball nut 1120 in the axial direction (the Y axis direction in the figure) of the screw shaft body 1110.

The pulley 1130 is rotated around the axis of the screw shaft body 1110 by a rotation torque transmitted from the drive unit 1150, and rotates the ball nut 1120 via a disk 1131 that is fixed to an end surface of the ball nut 1120 by a fastening force of a fastening member 1152.

An outer circumferential surface of the pulley 1130 may be provided with a structure such as a tooth groove to improve force transmission efficiency between the structure and a belt 1151.

The drive unit 1150 is fixed to the second housing 1142 and rotatably drives the pulley 1130. In the present embodiment, the drive unit 1150 includes a motor, a drive pulley 1153 mounted on an output shaft of the motor, and an endless belt 1151 wound around the drive pulley 1153 and the pulley 1130 which functions as a driven pulley.

The steering device 1100 is configured with an assist mechanism that includes a ball screw device and the drive unit 1150. The ball screw device includes the screw shaft body 1110, the ball nut 1120, and the pulley 1130. The drive unit 1150 includes the drive pulley 1153 having a smaller diameter than the pulley 1130. The assist mechanism generates an assist force that assists a rotation torque from the steering member 1200. Specifically, the assist mechanism transmits the assist force to the screw shaft body 1110 by the following operation. That is, when the motor rotates the drive pulley 1153, the pulley 1130 is rotated via the belt 1151. Since the pulley 1130 has a larger diameter than the drive pulley 1153, the pulley 1130 is in a decelerated state. The ball nut 1120 integrally mounted with the pulley 1130 is also rotated. When the ball nut 1120 is rotated relative to the screw shaft body 1110, the balls 1121 receive a load (a friction force) from the ball nut 1120 and the screw shaft body 1110 and endlessly circulate through the rolling path and the circulation path. A torque applied to the ball nut 1120 is converted into a linear motion of the screw shaft body 1110 by endlessly circulating the balls 1121, and the screw shaft body 1110 moves relative to the ball nut 1120 in the axial direction. That is, an axial force is applied to the screw shaft body 1110. The axial force applied to the screw shaft body 1110 serves as an assist force to assist a steering operation from the driver.

As shown in Fig. 9, the first biasing member 1191 and the second biasing member 1192 are annular members that are respectively provided at two sides of the outer ring of the bearing 1170. The first biasing member 1191 and the second biasing member 1192 regulate an axial movement of the bearing 1170 relative to the bearing holding portion 1143 of the first housing 1141 within a predetermined range. In a state in which no force is applied to the bearing 1170 from other members, the first biasing member 1191 and the second biasing member 1192 maintain the bearing 1170 at a neutral position where the bearing 1170 may move to an opening side or an opposite side relative to the bearing holding portion 1143. According to the present embodiment, the first biasing member 1191 is brought into contact with an end surface of the outer ring of the bearing 1170 at a side near the engagement portion 1145, and the second biasing member 1192 is brought into contact with an end surface of the outer ring of the bearing 1170 at a side opposite to the engagement portion 1145. Although rubber is used as a material of the first biasing member 1191 and the second biasing member 1192 in the present embodiment, the present invention is not limited thereto. Alternatively, the material may include a spring such as a coil spring and a plate spring, an elastomer, and the like. The first biasing member 1191 and the second biasing member 1192 have the same size, the same shape, and the same elastic modulus.

The first holding member 1181 is an annular member that holds the first biasing member 1191 in a fitted state. The first holding member 1181 includes a first outer circumferential surface 1185 that abuts against an inner circumferential surface of the bearing holding portion 1143, a first clamping surface 1183 that faces an end surface of the outer ring of the bearing 1170 and clamps the first biasing member 1191, and a first fitting portion 1187 to which the first biasing member 1191 is fitted. The first holding member 1181 determines a position of the first biasing member 1191 held by the first fitting portion 1187 with respect to the bearing holding portion 1143 by fitting the first outer circumferential surface 1185 to the bearing holding portion 1143. The first holding member 1181 engages with the engagement portion 1145 of the first housing 1141 such that the first holding member 1181 is in a state of not moving with respect to the bearing holding portion 1143. The first biasing member 1191 is compressed between the first clamping surface 1183 and the first tip end surface 1173 of the first protruding member 1171.

According to the present embodiment, the first fitting portion 1187 and the first protruding member 1171 are fitted in a slidable clearance fit state. The first biasing member 1191 is surrounded by the inner circumferential surface of the bearing holding portion 1143, the first tip end surface 1173 of the first protruding member 1171, an outer circumferential surface of the first fitting portion 1187, and the first clamping surface 1183. Deformation of the first biasing member 1191 due to compression is regulated. Therefore, a repulsive force of the first biasing member 1191 increases rapidly when the first biasing member 1191 is strongly compressed between the first holding member 1181 and the first protruding member 1171, a movement of the bearing 1170 can be strongly regulated and the first biasing member 191 can be prevented from buckling.

The second holding member 1182 is an annular member that holds the second biasing member 1192 in a fitted state. The second holding member 1182 includes a second outer circumferential surface 1186 that abuts against the inner circumferential surface of the bearing holding portion 1143, a second clamping surface 1184 that faces the second tip end surface 1174 of the second protruding member 1172 and clamps the second protruding member 1192, and the second fitting portion 1188 to which the second biasing member 1192 is fitted. According to the present embodiment, the second holding member 1182 has the same shape as the first holding member 1181. The second holding member 1182 determines a position of the second biasing member 1192 held by the second fitting portion 1188 with respect to the bearing holding portion 1143 by fitting the second outer circumferential surface 1186 to the bearing holding portion 1143.

The inner circumferential surface of the bearing holding portion 1143 is a cylinder whose diameter does not change in the axial direction. The first outer circumferential surface 1185 of the first holding member 1181 and the second outer circumferential surface 1186 of the second holding member 1182 are fitted to the bearing holding portion 1143. Therefore, a processing error of the bearing holding portion 1143 does not affect a relative positional relationship between the first biasing member 1191 held by the first holding member 1181 and the second biasing member 1192 held by the second holding member 1182. Therefore, in the axial direction (the Y axis direction in the figure), when the bearing 1170 moves from the neutral position to either side, a moving distance (moving state) of the bearing 1170 from the neutral positon to one side can be made equal to a moving distance (moving state) of the bearing 1170 from the neutral position to the other side.

The second fitting portion 1188 and the second protruding member 1172 are fitted in a slidable clearance fit state. The second biasing member 1192 is surrounded by the inner circumferential surface of the bearing holding portion 1143, the second tip end surface 1174 of the second protruding member 1172, an outer circumferential surface of the second fitting portion 1188, and the second clamping surface 1184. Similar to the first biasing member 1191, deformation of the second biasing member 1192 due to compression is regulated. Therefore, a repulsive force of the second biasing member 1192 increases rapidly when the second biasing member 1192 is strongly compressed, a movement of the bearing 1170 can be strongly regulated and the second biasing member 1192 can be prevented from buckling.

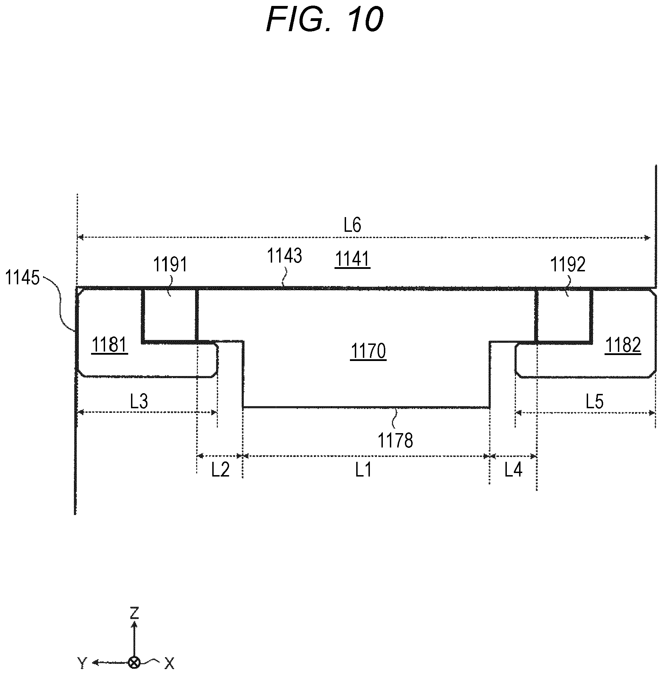

Next, a relationship among lengths of the outer ring 1178, the first protruding member 1171, the first holding member 1181, the second protruding member 1172, the second holding member 1182, and the bearing holding portion 1143 in the axial direction (the Y axis direction in the figure) will be described. Fig. 10 is a diagram showing a relationship of length directions of members in the axial direction. Fig. 10 corresponds to Fig. 9.

An axial length of the outer ring 1178 of the bearing 1170 is defined as an outer ring length L1, an axial length of the first protruding member 1171 is defined as a first protruding member length L2, an axial length of the first holding member 1181 is defined as a first holding member length L3, an axial length of the second protruding member 1172 is defined as a second protruding member length L4, an axial length of the second holding member 1182 is defined as a second holding member length L5, and an axial length of the bearing holding portion 1143, that is, a length from the engagement portion 1145 to an end face of the first housing 1141 at a side near the second housing 1142, is defined as a bearing holding portion length L6. Axial lengths of the members are set to satisfy at least one of a relational expression of the outer ring length L1 + the first holding member length L3 + the second protruding member length L4 + the second holding member length L5 > the bearing holding portion length L6, and a relational expression of the outer ring length L1 + the first protruding member length L2 + the first holding member length L3 + the second holding member length L5 > the bearing holding portion length L6.

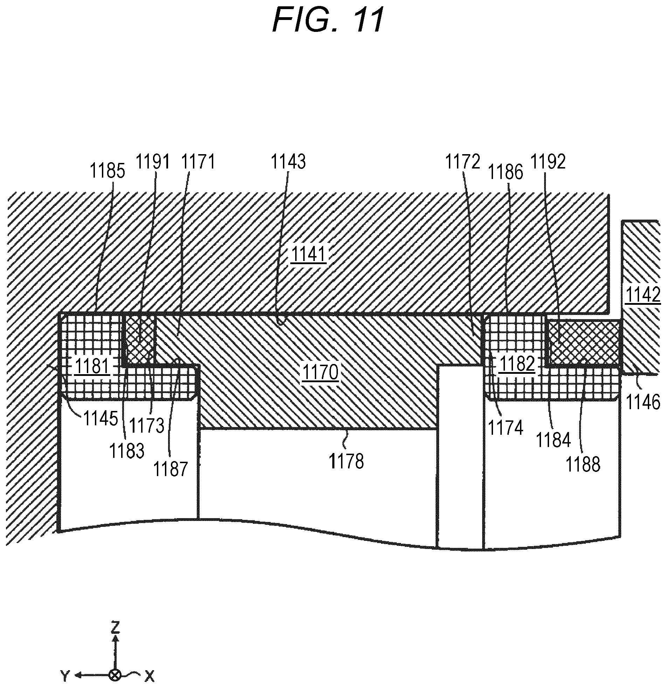

For example, in a case in which the relational expression of the outer ring length L1 + the first holding member length L3 + the second protruding member length L4 + the second holding member length L5 > the bearing holding portion length L6 is satisfied, as shown in Fig. 11, when a mounting direction of the second holding member 1182 is wrong, that is, when the second holding member 1182 is mounted in an opposite front-rear direction, the second fitting portion 1188 and the second protruding member 1172 cannot be fitted. Accordingly, the second fitting portion 1188 protrudes from an opening end surface of the first housing 1141 and interferes with the pressing portion 1146 of the second housing 1142, and a gap may be formed between the first housing 1141 and the second housing 1142, so that a mounting error of at least one of the first holding member 1181 and the second holding member 1182 can be easily found.

On the other hand, in a case in which the relational expression of the outer ring length L1 + the first protruding member length L2 + the first holding member length L3 + the second holding member length L5 > the bearing holding portion length L6 is satisfied, when a mounting direction of the first holding member 1181 is wrong, the first fitting portion 1187 and the first protruding member 1171 cannot be fitted, the second holding member 1182 protrudes from the opening end surface of the first housing 1141, and a gap may be formed between the first housing 1141 and the second housing 1142.

According to the present embodiment, since the above two relational expressions are satisfied, a gap may be formed between the first housing 1141 and the second housing 1142 when the mounting direction of at least one of the first holding member 1181 and the second holding member 1182 is wrong, and a defect can be easily found.

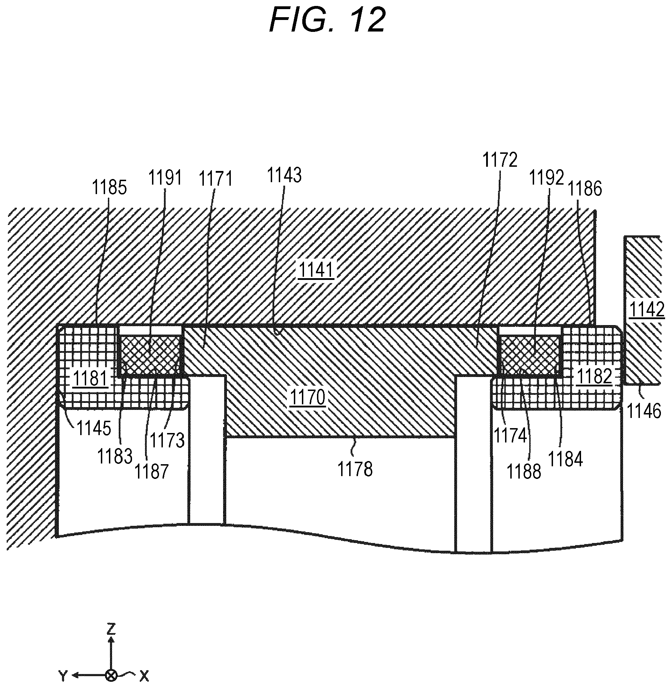

Next, a preloading method of the first biasing member 1191 and the second biasing member 1192 when mounting directions of the first holding member 1181 and the second holding member 1182 are correct will be described. Fig. 12 is a cross-sectional view showing the first housing 1141 and the second housing 1142 before coupling. As shown in Fig. 12, the first holding member 1181 that holds the first biasing member 1191, the bearing 1170, and the second holding member 1182 that holds the second biasing member 1192 are inserted in advance into the bearing holding portion 1143 of the first housing 1141. The pressing portion 1146 of the second housing 1142 presses the second holding member 1182 towards the engagement portion 1145 by coupling the first housing 1141 and the second housing 1142 in the axial direction. A pressing force compresses the first biasing member 1191 between the first clamping surface 1183 and the first tip end surface 1173 and compresses the second biasing member 1192 between the second tip end surface 1174 and the second clamping surface 1184. The first biasing member 1191 and the second biasing member 1192 are evenly pressurized.

According to the steering device 1100 including the ball screw device described in the embodiment described above, since the pressing portion 1146 of the second housing 1142 presses the second holding member 1182 accommodated in the bearing holding portion 1143, the first biasing member 1191 and the second biasing member 1192 can be pressurized in the axial direction with high accuracy without providing a spigot portion in the second housing 1142 to press the second biasing member 1182. Therefore, a freedom degree of design such as accommodating the large pulley 1130 inside the second biasing member 1192 can be improved.

Since a coupling surface of the first housing 1141 and a coupling surface of the second housing 1142 are flush with each other, the coupling surface of the first housing 1141 and the coupling surface of the second housing 1142 can be easily processed.

Since the first holding member 1181 and the second holding member 1182 abut against and slide on the inner circumferential surface of the bearing holding portion 1143, the first biasing member 1191 and the second biasing member 1192 can be pressurized in parallel to a tube axis direction of the bearing holding portion 1143 without causing a processing error of the bearing holding portion 1143. Therefore, no matter in which direction the driver rotates the steering member 1200, a steering feeling transmitted from the steering member 1200 can be the same, and the driver can be prevented from having an uncomfortable feeling.

In a state in which the ball nut 1120 is not rotated, the first biasing member 1191 and the second biasing member 1192 respectively press the bearing 1170 in opposite axial directions, and maintain the bearing 1170 at the neutral position. When the ball nut 1120 starts to rotate, one of the first biasing member 1191 and the second biasing member 1192 is compressed to increase a preloading, and the other one is expanded to decrease a preloading. Accordingly, the ball nut 1120 can be prevented from vibrating in the axial direction and a gear striking noise can be reduced. In addition, a steering feeling of the driver can be prevented from lowering at the start of turning the steering member 1200.

When a strong force is applied to the bearing 1170 in the axial direction, the first fitting portion 1187 of the first holding member 1181 or the second fitting portion 1188 of the second holding member 1182 abuts against the bearing 1170, such that the first biasing member 1191 or the second biasing member 1192 is prevented from being greatly deformed. Accordingly, durability of the first biasing member 1191 and the second biasing member 1192 can be improved.

The present invention is not limited to the embodiment described above. For example, another embodiment of the present invention may be an embodiment implemented by combining any constituent element described in the present specification or excluding some constituent elements. In addition, the present invention includes various modifications of the above-described embodiment conceived by those skilled in the art without departing from the spirit of the invention, that is, meanings indicated by words described in claims.

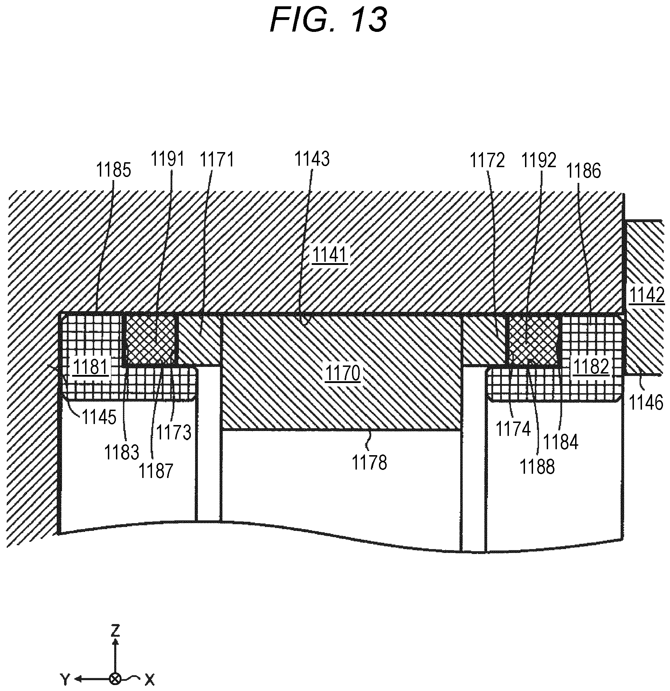

As shown in Fig. 13, for example, the first protruding member 1171 and the second protruding member 1172 may be separate from the bearing 1170. Alternatively, only one of the first protruding member 1171 and the second protruding member 1172 may be a separate body.

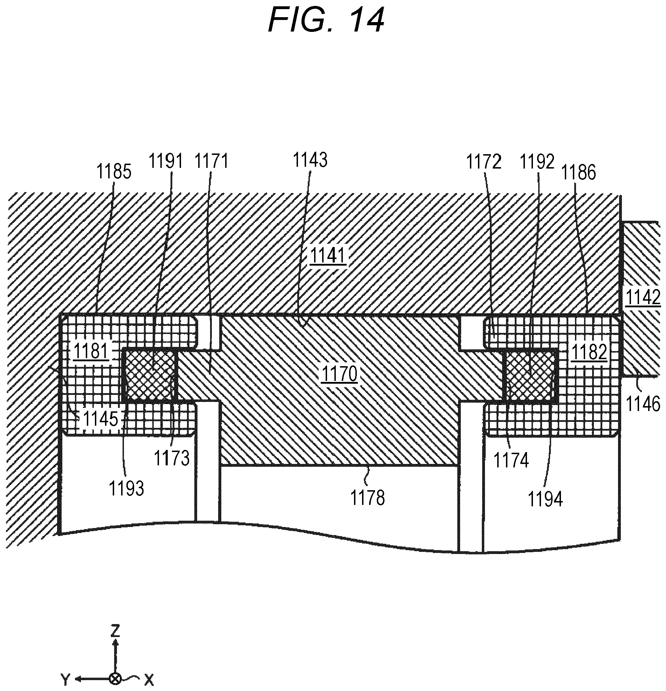

As shown in Fig. 14, the first holding member 1181 may include an annular first groove portion 1193 that is opened towards the bearing 1170. The first biasing member 1191 can be fitted into the first groove portion 1193 and the first protruding member 1171 can be inserted into the first groove portion 1193. Similarly, the second holding member 1182 may include an annular second groove portion 1194 that is opened towards the bearing 1170. The second biasing member 1192 can be fitted into the second groove portion 1194 and the second protruding member 1172 can be inserted into the second groove portion 1194.

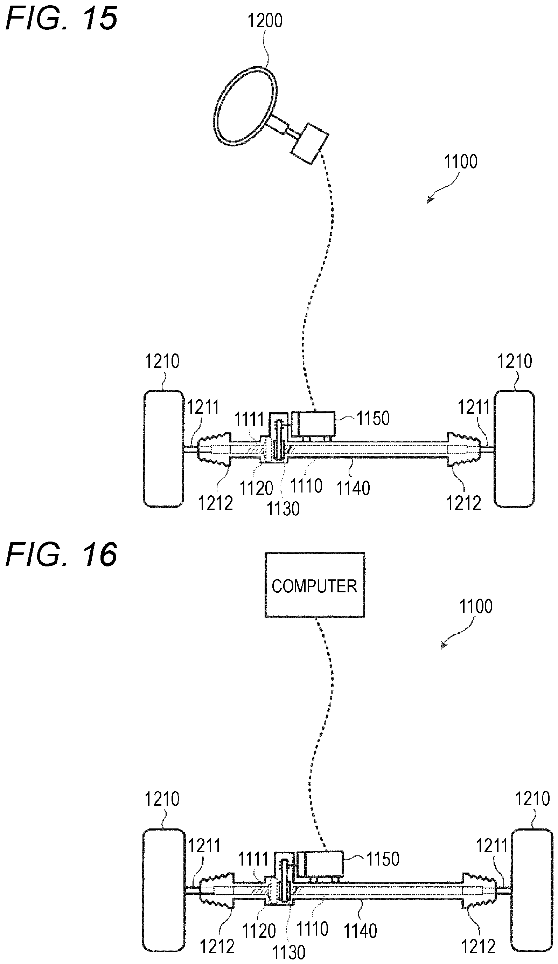

As shown in Fig. 15, the steering device 1100 may be, for example, a so-called steer by wire system (SBW) in which the steering member 1200 and the screw shaft body 1110 are not mechanically coupled, a sensor or the like reads a rotation angle of the steering member 1200, rotation of the ball nut 1120 causes the screw shaft body 1110 to reciprocate based on a signal of the sensor or the like, and the turning wheels 1210 are turned.

As shown in Fig. 16, the steering device 1100 may be an automatic steering device that does not include the steering member 1200, the steering shaft 1160, or the like, and is steered by a computer.

The present disclosure relates to a steering device of a vehicle or the like and may be applied to a steering device that can assist a steering force from a person, an electrically steered SBW in which a steering member and turning wheels are not mechanically coupled, an automatic steering device, and the like.

## Claims

1. A ball screw device comprising:
a screw shaft body that includes a first screw groove at least in part on an outer circumferential surface of the screw shaft body;
a ball nut that includes a second screw groove at least in part on an inner circumferential surface of the ball nut, the second screw groove having a rolling path on which a plurality of balls rolls together with the first screw groove;
a housing that accommodates the screw shaft body and the ball nut;
a bearing that holds the ball nut rotatably with respect to the housing;
a first biasing member and a second biasing member that are respectively provided on both ends of the bearing, and the first biasing member and the second biasing member having an annular shape; and
a first holding member that holds the first biasing member in a state where the first biasing member is fitted into the first holding member and a second holding member that holds the second biasing member in a state where the second biasing member is fitted into the second holding member, the first holding member and the second holding member having an annular shape,
wherein the housing includes a first housing and a second housing that are coupled to each other in a surface-contact state in an axial direction of the screw shaft body, the first housing and the second housing having a cylindrical shape,
wherein the first housing includes a bearing holding portion that holds the bearing slidably in the axial direction, the bearing holding portion having a cylindrical shape,
wherein the second housing includes a pressing portion that is arranged to protrude radially inward, and
wherein at least one of the first holding member and the second holding member is configured to generate a gap between the first housing and the second housing when the bearing, the first biasing member, the second biasing member, the first holding member, and the second holding member are wrongly mounted to one another.

2. The ball screw device according to claim 1, wherein the first housing further includes a diameter expansion portion that is provided at an end portion of the bearing holding portion at a side of the second housing and has a larger diameter than the bearing holding portion,
wherein the pressing portion of the second housing protrudes radially inward than the bearing holding portion,
wherein the first holding member includes:
a first outer circumferential surface portion that abuts against an inner circumferential surface of the bearing holding portion,
a first clamping surface portion that faces one of end surfaces of the bearing and clamps the first biasing member, and
a first fitting portion to which the first biasing member is fitted,
wherein the second holding member includes:
a second outer circumferential surface portion that abuts against the inner circumferential surface of the bearing holding portion,
a second clamping surface portion that faces the other of end surfaces of the bearing and clamps the second biasing member,
a second fitting portion to which the second biasing member is fitted, and
a flange that protrudes radially outward than the bearing holding portion and is accommodated in the diameter expansion portion, and
wherein the pressing portion of the second housing is configured to press the flange of the second holding member by coupling the first housing and the second housing in the axial direction, such that the first biasing member and the second biasing member are pressurized.

3. The ball screw device according to claim 1, further comprising:
a first protruding member that protrudes, in the axial direction of the screw shaft body, from one of end surfaces of an outer ring of the bearing towards the first holding member, the first protruding member having an annular shape,
wherein the pressing portion is positioned radially inward than the bearing holding portion,
wherein the first holding member includes:
a first clamping surface portion that faces a tip end surface of the first protruding member and clamps the first biasing member, the first clamping surface portion having an annular shape, and
a first fitting portion that protrudes from the first clamping surface portion fittably with the first protruding member and holds the first biasing member, the first fitting portion having an annular shape, and
wherein the first biasing member and the second biasing member are configured to be pressurized via the pressing portion by coupling the first housing and the second housing in the axial direction.

4. The ball screw device according to claim 3, further comprising:
a second protruding member that protrudes, in the axial direction, from the other of end surfaces of the outer ring of the bearing towards the second holding member, the second protruding member having an annular shape,
wherein the second holding member includes:
a second clamping surface portion that faces a tip end surface of the second protruding member and clamps the second biasing member, the second clamping surface portion having an annular shape, and
a second fitting portion that protrudes from the second clamping surface portion towards an inner side of the second protruding member in a radial direction of the second protruding member and into which the second biasing member is fitted, the second fitting portion having an annular shape.

5. The ball screw device according to claim 3 or 4, a clearance-fit is formed between the first protruding member and the first fitting portion, such that the first protruding member and the first fitting portion are slidable with each other in the axial direction.

6. The ball screw device according to any one of claims 3 to 5, wherein the first protruding member is formed integrally with the outer ring of the bearing.

7. The ball screw device according to any one of claims 3 to 6, wherein an outer ring length L1, a first protruding member length L2, a first holding member length L3, a second protruding member L4, a second holding member L5, and a bearing holding portion length L6 are designed to satisfy at least one of a first relational expression and a second relational expression, and
wherein the first relational expression is obtained by an inequality (1): L1+L3+L4+L5>L6 (1), and the second relational expression is obtained by an inequality (2): L1+L2+L3+L5>L6 (2), where the outer ring length L1 represents an axial length of the outer ring of the bearing; the first protruding member length L2 represents an axial length of the first protruding member; the first holding member length L3 represents an axial length of the first holding member; the second protruding member length L4 represents an axial length of the second protruding member; the second holding member length L5 represents an axial length of the second holding member; and the bearing holding portion length L6 represents an axial length of the bearing holding portion.

8. A steering device including the ball screw device according to claim 2 or 3, the steering device further comprising:
a driver that is fixed in the housing and rotatably drives the ball nut,
wherein the screw shaft body is configured to turn turning wheels.
